## Europäisches Patentamt

## European Patent Office

## Office européen des brevets

(11) Veröffentlichungsnummer : **0 101 796**
**B1**

(12) **EUROPÄISCHE PATENTSCHRIFT**

(45) Veröffentlichungstag der Patentschrift :
16.04.86

(51) Int. Cl.⁴ : **F 16 D   3/50**

(21) Anmeldenummer : 83105315.2

(22) Anmeldetag : 30.05.83

(54) **Wellenkupplung.**

(30) Priorität : **27.07.82 DE 3227988**

(43) Veröffentlichungstag der Anmeldung :
**07.03.84 Patentblatt 84/10**

(45) Bekanntmachung des Hinweises auf die Patenterteilung : **16.04.86 Patentblatt 86/16**

(84) Benannte Vertragsstaaten :
**AT CH DE FR GB IT LI NL SE**

(56) Entgegenhaltungen :
**FR-A- 1 406 292**
**GB-A- 1 522 829**
**US-A- 3 026 692**
**Prospekt der Firma Carl Zeiss "Winkelmesssysteme,**
**60-780d, AWX/73A00"**

(73) Patentinhaber : **Dr. Johannes Heidenhain GmbH**
**Nansenstrasse 17**
**D-8225 Traunreut (DE)**

(72) Erfinder : **Ernst, Alfons, Dipl.-Ing.**
**Traunring 62**
**D-8225 Traunreut (DE)**

Jouve, 18, rue St-Denis, 75001 Paris, France

## Beschreibung

Die Erfindung betrifft eine Kupplung zur winkelgenauen Übertragung einer Bewegung zwischen zwei Wellen gemäß dem Oberbegriff des Anspruchs 1.

Eine derartige Kupplung findet beispielsweise zum Anschluß der Welle einer Winkelmeßeinrichtung an Wellen einer Werkzeugmaschine Verwendung.

Aus dem Prospekt der Firma Carl Zeiss « Winkelmeßsysteme, 60-780d, AWX/73Aoo » ist eine Kupplung mit zwei senkrecht zueinander angeordneten Federparallelogrammen bekannt, die eine erste Befestigungsnabe für eine erste Welle und eine zweite Befestigungsnabe für eine zweite Welle mit zwei Zwischenstücken verbinden, zwischen denen sich ein Membranbalg befindet. Jedes Federparallelogramm besteht aus zwei Blattfedern, die jeweils zwei Biegegelenke mit senkrecht zu den Wellenachsen verlaufenden Drehachsen darstellen ; die beiden Federparallelogramme erlauben eine zweidimensionale translatorische Bewegung in der Kupplungsebene senkrecht zu den Wellenachsen, um einen Parallelversatz zwischen den beiden Wellen auszugleichen. Der Membranbalg zwischen den beiden Zwischenstücken stellt ein zweiachsiges Kippgelenk mit senkrecht zu den Wellenachsen verlaufenden Drehachsen zum Ausgleich eines Winkelversatzes zwischen den beiden Wellen dar. Diese Kupplung weist den Nachteil einer erheblichen Baulänge auf.

Der Erfindung liegt die Aufgabe zugrunde, bei einer derartigen Kupplung sowohl die Baulänge als auch die Anzahl der Bauelemente zu reduzieren.

Diese Aufgabe wird erfindungsgemäß durch die kennzeichnenden Merkmale des Anspruchs 1 gelöst.

Die mit der Erfindung erzielten Vorteile bestehen insbesondere darin, daß die Einsparung des Membranbalgs und eines Zwischenstücks sowie die Ersetzung der Blattfedern mit senkrecht zu den Wellenachsen verlaufenden Biegegelenkachsen durch Federn mit parallel zu den Wellenachsen verlaufenden Biegegelenkachsen eine erhebliche Verkürzung der Baulänge zur Folge hat, wodurch sich ein flexiblerer Einsatz einer solchen Kupplung ergibt. Die verringerte Teilezahl ermöglicht eine preisgünstige und leichtere Kupplung, eine reduzierte Montagezeit und eine einfachere Lagerhaltung.

Vorteilhafte Weiterbildungen der Erfindung entnimmt man den Unteransprüchen.

Ein Ausführungsbeispiel der Erfindung wird anhand der Zeichnung näher erläutert.

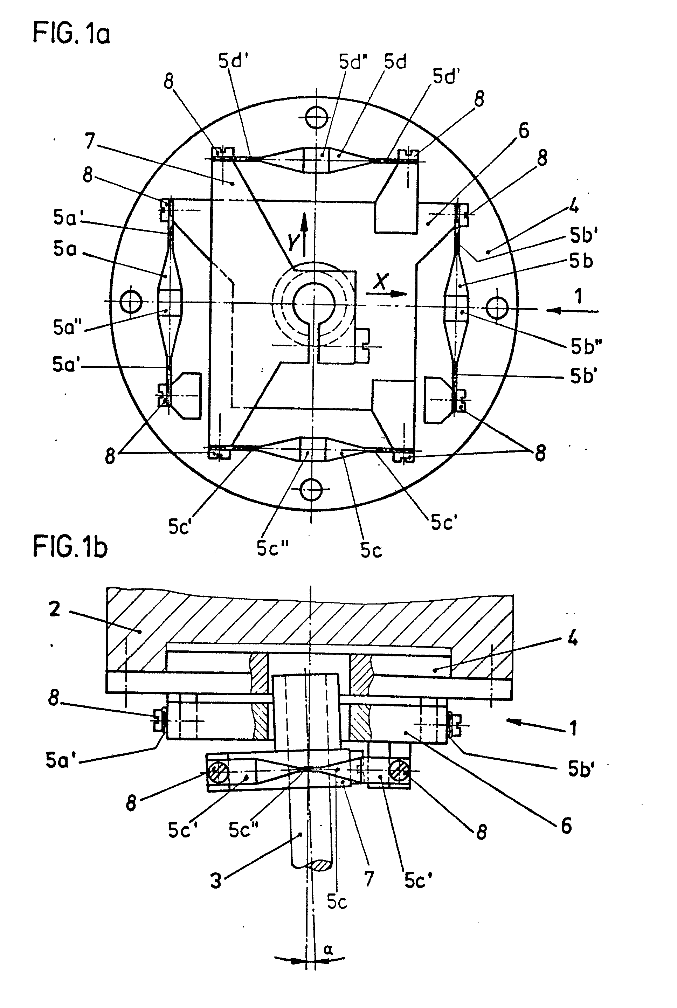

In Figur 1a, b ist in einer Draufsicht und in einem Querschnitt eine Kupplung 1 zur hochgenauen Übertragung einer Winkelbewegung zwischen zwei Wellen 2, 3 gezeigt, die einen Parallelversatz und einen Winkelversatz α aufweisen können. Die Antriebswelle 2, die beispielsweise mit dem Rundtisch einer nicht gezeigten Werkzeugmaschine verbunden sein kann, ist durch eine nicht dargestellte Schraubverbindung an einer ersten Befestigungsnabe 4 angebracht, die über ein erstes Federparallelogramm 5a, b mit einem Zwischenstück 6 verbunden ist, das seinerseits über ein zweites Federparallelogramm 5c, d mit einer zweiten Befestigungsnabe 7 zum Anschluß der Abtriebswelle 3 verbunden ist, die durch die Welle einer nicht gezeigten Winkelmeßeinrichtung gebildet sein kann.

Die Federn 5a-5d bestehen erfindungsgemäß aus einem Hohlprofil in Form dünnwandiger biegesteifer Metallrohre, die an beiden Enden Biegegelenke in Form von Quetschstellen 5a'-5d' aufweisen, deren Gelenkachsen parallel zu den Wellenachsen verlaufen ; diese Quetschstellen 5a'-5d' dienen gleichzeitig als ebene Befestigungsflächen zum Anbringen der Federn 5a-d an den Befestigungsnaben 4, 7 und am Zwischenstück 6 mittels Schrauben 8.

Die Biegegelenke 5a', b' des ersten Federparallelogramms 5a, b erlauben dem Zwischenstück 6 eine translatorische Bewegung in X-Richtung bezüglich der ersten Befestigungsnabe 4 und die Biegegelenke 5c', d' des zweiten Federparallelogramms 5c, d der zweiten Befestigungsnabe 7 eine translatorische Bewegung in Y-Richtung bezüglich des Zwischenstücks 6, so daß die vorgeschlagene Kupplung eine zweidimensionale translatorische Bewegung in ihrer Ebene senkrecht zu den Achsen der Welle 2, 3 zuläßt, um einen Parallelversatz zwischen den beiden Wellen 2, 3 auszugleichen.

Erfindungsgemäß weisen die Federn 5a-5d zwischen den äußeren Biegegelenken 5a'-5d' jeweils noch ein mittleres Biegegelenk 5a"-5d" in Form von Quetschstellen auf, deren Gelenkachsen senkrecht zu den Wellenachsen verlaufen. Die mittleren Biegegelenke 5a", 5b" des ersten Federparallelogramms 5a, 5b erlauben dem Zwischenstück 6 eine Drehbewegung um eine in X-Richtung verlaufende Drehachse bezüglich der ersten Befestigungsnabe 4 und die Biegegelenke 5c", 5d" des zweiten Federparallelogramms 5c, 5d der zweiten Befestigungsnabe 7 eine Drehbewegung um eine in Y-Richtung verlaufende Drehachse bezüglich des Zwischenstücks 6, so daß die mittleren Biegegelenke 5a"-5d" zusammen ein zweidimensionales Kippgelenk mit senkrecht zu den Wellenachsen verlaufenden Drehachsen bilden, um einen Winkelversatz α zwischen den beiden Wellen 2, 3 auszugleichen.

In nicht gezeigter Weise können die Federn der Federparallelogramme auch aus biegesteifen Stangen bestehen, wobei die Biegegelenke durch Querschnittsverminderungen in Form von Nuten gebildet sind. Die Nuten der äußeren Biegegelenke verlaufen parallel zu den Wellenachsen und die Nuten der mittleren Biegegelenke senkrecht zu den Wellenachsen.

## Patentansprüche

1. Kupplung zur winkelgenauen Übertragung einer Bewegung zwischen zwei Wellen (2, 3) zum Ausgleich einer Parallel- und/oder Winkelverlagerung, insbesondere zur Winkeleinstellung oder Winkelmessung, mittels zweier senkrecht zueinander angeordneter Federparallelogramme, die eine erste Befestigungsnabe (4) für die erste Welle (2) und eine zweite Befestigungsnabe (7) für die zweite Welle (3) mit einem Zwischenstück (6) verbinden und eine zweidimensionale translatorische Relativbewegung zwischen den Befestigungsnaben (4, 7) in einer Ebene senkrecht zu den Wellenachsen (2, 3) erlauben, wobei jede Feder (5) der Federparallelogramme Biegegelenke (5', 5'') aufweist, und mittels eines zweiachsigen Kippgelenks, dessen Drehachsen in einer Ebene senkrecht zu den Wellenachsen (2, 3) liegen, dadurch gekennzeichnet, daß die Federn (5) der Federparallelogramme jeweils drei Biegegelenke (5', 5'') aufweisen, die durch zwei biegesteife Abschnitte miteinander verbunden sind, daß die beiden äußeren Biegegelenke (5') parallel zu den Wellenachsen (2, 3) verlaufende Drehachsen besitzen und daß die mittleren Biegegelenke (5'') zusammen das zweiachsige Kippgelenk mit senkrecht zu den Wellenachsen (2, 3) verlaufenden Drehachsen bilden.

2. Kupplung nach Anspruch 1, dadurch gekennzeichnet, daß die Federn (5) aus einem biegesteifen Hohlprofil bestehen und daß die Biegegelenke (5', 5'') durch Quetschstellen des Hohlprofils gebildet sind.

3. Kupplung nach Anspruch 1, dadurch gekennzeichnet, daß die Federn (5) aus einer biegesteifen Stange bestehen und daß die Biegegelenke (5', 5'') durch Querschnittsverminderungen vorzugsweise in Form von Nuten gebildet sind.

4. Kupplung nach Anspruch 2, dadurch gekennzeichnet, daß die Quetschstellen (5') der Federn (5) zusätzlich als Befestigungsflächen zum Anbringen der Federn (5) an den Befestigungsnaben (4, 7) und dem Zwischenstück (6) dienen.

## Claims

1. Coupling for the angularly accurate transmission of a movement between two shafts (2, 3) for compensating a parallel and/or angular shift, especially for angle adjustment or angle measurement, by means of two spring parallelograms which are arranged perpendicularly relative to one another and connect a first fastening hub (4) for the first shaft (2) and a second fastening hub (7) for the second shaft (3) to an intermediate piece (6), and which allow a two-dimensional translational relative movement between the fastening hubs (4, 7) in a plane perpendicular relative to the shaft axes (2, 3), each spring (5) of the spring parallelograms having bending joints (5', 5''), and by means of a biaxial tilting joint, the axes of rotation of which lie in a plane perpendicular relative to the shaft axes (2, 3), characterised in that the springs (5) of the spring parallelograms each have three bending joints (5', 5'') which are connected to one another by means of two portions resistant to bending, in that the two outer bending joints (5') have axes of rotation extending parallel to the shaft axes (2, 3), and in that the middle bending joints (5'') together form the biaxial tilting joint with axes of rotation extending perpendicularly relative to the shaft axes (2, 3).

2. Coupling according to Claim 1, characterised in that the springs (5) consist of a hollow profile resistant to bending, and in that the bending joints (5', 5'') are formed by pinched sections of the hollow profile.

3. Coupling according to Claim 1, characterised in that the springs (5) consist of a rod resistant to bending, and in that the bending joints (5', 5'') are formed by cross-sectional reductions preferably in the form of grooves.

4. Coupling according to Claim 2, characterised in that the pinched sections (5') of the springs (5) additionally serve as fastening surfaces for attaching the springs (5) to the fastening hubs (4, 7) and to the intermediate piece (6).

## Revendications

1. Accouplement pour la transmission angulaire exacte d'un déplacement entre deux arbres (2, 3) pour compenser un décalage parallèle et/ou angulaire, en particulier pour le réglage ou la mesure des angles, au moyen de deux parallélogrammes à ressorts disposés perpendiculairement l'un par rapport à l'autre qui relient à une pièce intermédiaire (6) un premier moyeu de fixation (4) pour le premier arbre (2) et un second moyeu de fixation (7) pour le second arbre (3) et permettent un mouvement de translation relatif bidimensionnel entre les moyeux de fixation (4, 7) dans un plan perpendiculairement aux axes des arbres (2, 3), chaque ressort (5) des parallélogrammes comportant des joints articulés de flexion (5', 5''), et au moyen d'une articulation de basculement biaxiale dont les axes de rotation se situent dans un plan perpendiculairement aux axes des arbres (2, 3), caractérisé par le fait que les ressorts (5) des parallélogrammes comportent respectivement trois joints articulés de flexion (5', 5'') qui sont mutuellement raccordés par deux sections rigides à la flexion, que les deux joints articulés de flexion externes (5') présentent des axes de rotation disposés parallèlement aux axes des arbres (2, 3) et que les joints articulés de flexion médians (5'') forment ensemble l'articulation de basculement biaxiale avec axes de rotation disposés perpendiculairement aux axes des arbres (2, 3).

2. Accouplement selon la revendication 1, caractérisé par le fait que les ressorts (5) sont constitués par un profilé creux rigide à la flexion et que les joints articulés de flexion (5', 5'') sont formés par des zones écrasées du profilé creux.

3. Accouplement selon la revendication 1, caractérisé par le fait que les ressorts (5) sont constitués par une tige rigide à la flexion et que les joints articulés de flexion (5, 5″) sont formés par des réductions de la section transversale de préférence sous forme de rainures.

4. Accouplement selon la revendication 2, caractérisé par le fait que les zones écrasées (5′) des ressorts (5) servent en plus de surfaces de fixation pour fixer les ressorts (5) au moyeu de fixation (4, 7) et à la pièce intermédiaire (6).

FIG. 1a

FIG. 1b